# EUROPÄISCHE PATENTSCHRIFT

(11) **EP 3 148 751 B1**
(45) Veröffentlichungstag und Bekanntmachung des Hinweises auf die Patenterteilung: **04.07.2018**
(21) Anmeldenummer: 15728787.1
(22) Anmeldetag: 28.05.2015
(51) Int. Cl.: B25J 9/00, B25J 19/06, B23K 37/04

(54) **MRK-ARBEITSPLATZ MIT EINER AUFSPANNVORRICHTUNG**
HUMAN-ROBOT COLLABORATION WORKSTATION WITH A MOUNTING DEVICE
POSTE DE TRAVAIL POUR COLLABORATION HOMME-ROBOT ÉQUIPÉ D'UN DISPOSITIF DE MONTAGE

(30) Priorität: 02.06.2014 DE 102014210362
(43) Veröffentlichungstag der Anmeldung: 05.04.2017
(73) Patentinhaber: KUKA Systems GmbH, 86165 Augsburg (DE)
(72) Erfinder: STOCKSCHLAEDER, Julian, 86152 Augsburg (DE); GLATZ, Hans, 86179 Augsburg (DE)
(74) Vertreter: Ege Lee & Partner Patentanwälte PartGmbB
(86) Internationale Anmeldenummer: PCT/EP2015/061878
(87) Internationale Veröffentlichungsnummer: WO 2015/185442

(56) Entgegenhaltungen:
- WO-A1-2014/049637
- US-A- 5 704 601
- US-A1- 2004 118 897
- US-A1- 2010 044 414

## Beschreibung

Die Erfindung betrifft einen MRK-Arbeitsplatz, aufweisend einen Roboter mit einer Robotersteuerung und mit einem mehrere Gelenke und die Gelenke verbindende Glieder aufweisenden Roboterarm, dessen Gelenke von der Robotersteuerung automatisch zu verstellen sind, um ein von dem Roboterarm gehaltenes Werkzeug oder Werkstück durch Einstellen der Gelenke des Roboterarms im Raum zu halten und/oder zu bewegen, des Weiteren aufweisend eine Aufspannvorrichtung mit einem ortsfesten Grundgestell und einer Fixiervorrichtung, welche ausgebildet ist, ein Werkstück oder ein Werkzeug festzuhalten, derart, dass das an der Aufspannvorrichtung oder am Roboterarm gehaltene Werkstück in Zusammenwirken mit dem am Roboterarm oder an der Aufspannvorrichtung gehaltenen Werkzeug zu montieren und/oder zu bearbeiten ist.

Die WO 2014/049637 A1 beschreibt einen derartigen Arbeitsplatz zum Schweißen von Bauteilen mittels einer Schweißzange, die von einem Roboter geführt wird. Auf einem Wendetisch sind zwei identische Einspannvorrichtung schwenkbar gelagert. Jede Einspannvorrichtung ist zum Halten von zu schweißenden Bauteilen ausgebildet. Durch Drehen des Wendetisches kann jede Einspannvorrichtung wahlweise dem Roboter angenähert werden, so dass der Roboter mittels einer von ihm geführten Schweißzange die Bauteile schweißen kann, oder einem Menschen, d.h. einem Werker angenähert werden, so dass der Werker ein fertig geschweißtes Bauteil von der Einspannvorrichtung entnehmen und neue zu schweißende Bauteile an der Einspannvorrichtung einsetzen kann. Jede Einspannvorrichtung ist durch eine automatische Steuervorrichtung aktiv schwenkbar, so dass die Einspannvorrichtung durch aktives Bewegen je nach ihrer Zuordnung zum Werker oder zum Roboter unterschiedlich ausgerichtet werden kann.

Aufgabe der Erfindung ist es, einen MRK-Arbeitsplatz zu schaffen, der erweiterte Sicherheitseigenschaften aufweist.

Die Aufgabe der Erfindung wird gelöst durch einen MRK-Arbeitsplatz, aufweisend einen Roboter mit einer Robotersteuerung und mit einem mehrere Gelenke und die Gelenke verbindende Glieder aufweisenden Roboterarm, dessen Gelenke von der Robotersteuerung automatisch zu verstellen sind, um ein von dem Roboterarm gehaltenes Werkzeug oder Werkstück durch Einstellen der Gelenke des Roboterarms im Raum zu halten und/oder zu bewegen, des Weiteren aufweisend eine Aufspannvorrichtung mit einem ortsfesten Grundgestell und einer Fixiervorrichtung, welche ausgebildet ist, ein Werkstück oder ein Werkzeug festzuhalten, derart, dass das an der Aufspannvorrichtung oder am Roboterarm gehaltene Werkstück in Zusammenwirken mit dem am Roboterarm oder an der Aufspannvorrichtung gehaltenen Werkzeug zu montieren und/oder zu bearbeiten ist, wobei die Aufspannvorrichtung eine mechanische Verstelleinrichtung und eine von der Robotersteuerung ansteuerbare Auslöseeinrichtung aufweist und die Verstelleinrichtung ausgebildet ist, die Fixiervorrichtung bezüglich des Grundgestells aus einer Betriebsposition in eine Sicherheitsposition selbsttätig zu verstellen, wenn die Auslöseeinrichtung aktiviert ist.

Die Bezeichnung MRK-Arbeitsplatz steht für einen Mensch-Roboter-Kollaborations-Arbeitsplatz. An einem solchen MRK-Arbeitsplatz ist ein Mensch, der auch als Werker bezeichnet werden kann, tätig, wobei in räumlicher Nähe, insbesondere in unmittelbarer Zusammenarbeit mit dem Menschen ein automatisch ansteuerbarer Roboter Bewegungen ausführt, insbesondere Arbeiten an einem Werkstück vornimmt, ohne dass der Roboter durch einen Schutzzaun von dem Menschen abgegrenzt wäre. Insbesondere kann, falls erforderlich, an einem MRK-Arbeitsplatz ein Kontakt von Mensch und Roboter zugelassen sein bzw. stattfinden, insbesondere der Roboter von dem Menschen auch manuell geführt werden und/oder ein Werkstück von dem Menschen und dem Roboter gemeinsam gehandhabt und/oder bearbeitet werden.

Der erfindungsgemäße MRK-Arbeitsplatz kann ein stationär von der Aufspannvorrichtung ortsfest gehaltenes Werkstück und ein vom Roboter geführtes Werkzeug aufweisen. Dabei kann das Werkstück von dem robotergeführten Werkzeug bearbeitet und/oder montiert werden. Die vom Roboter ausgeführte Bearbeitung und/oder Montage wird dabei von einem Werker unterstützt, d.h. der Werker kann seinerseits manuell auf den Bearbeitungsvorgang und/oder den Montagevorgang einwirken, beispielsweise durch zusätzliches manuell geführtes Werkzeug und/oder durch manuell hinzugefügte Maschinenelemente oder weitere Bauteile.

Der erfindungsgemäße MRK-Arbeitsplatz kann alternativ oder ergänzend ein stationär von der Aufspannvorrichtung ortsfest gehaltenes Werkzeug und ein vom Roboter geführtes Werkstück aufweisen. Dabei kann das von dem robotergeführten Werkstück von dem ortsfesten Werkzeug bearbeitet und/oder montiert werden. Die vom Roboter ausgeführte Bearbeitung und/oder Montage wird dabei von einem Werker unterstützt, d.h. der Werker kann seinerseits manuell auf den Bearbeitungsvorgang und/oder den Montagevorgang einwirken, beispielsweise durch zusätzliches manuell geführtes Werkzeug und/oder durch manuell hinzugefügte Maschinenelemente oder weitere Bauteile.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Ein mehrere über Gelenke verbundene Glieder aufweisender Roboterarm kann als ein Knickarmroboter mit mehreren seriell nacheinander angeordneten Gliedern und Gelenken konfiguriert sein, insbesondere kann der redundante Industrieroboter einen Roboterarm mit sieben oder mehr Gelenken aufweisen.

Bei dem Roboter kann es sich insbesondere um einen redundanten Roboter handeln, unter dem ein mittels einer Robotersteuerung bewegbarer Roboterarm verstanden wird, der mehr manipulatorische Freiheitsgrade aufweist, als zur Erfüllung einer Aufgabe notwendig sind. Der Grad der Redundanz ergibt sich aus der Differenz der Anzahl von Freiheitsgraden des Roboterarms und der Dimension des Ereignisraums, in dem die Aufgabe zu lösen ist. Es kann sich dabei um eine kinematische Redundanz oder um eine aufgabenspezifische Redundanz handeln. Bei der kinematischen Redundanz ist die Anzahl der kinematischen Freiheitsgrade, im Allgemeinen die Anzahl der Gelenke des Roboterarms, größer als der Ereignisraum, welcher in einer realen Umgebung bei einer Bewegung im Raum durch die drei translatorischen und die drei rotatorischen Freiheitsgrade, also von sechs Freiheitsgrade gebildet wird. Ein redundanter Industrieroboter kann also beispielsweise ein Leichtbauroboter mit sieben Gelenken, insbesondere sieben Drehgelenken sein. Bei der aufgabenspezifischen Redundanz ist die Dimension der Aufgabenstellung hingegen kleiner als die Anzahl der kinematischen Freiheitsgrade des Roboterarms. Dies ist beispielsweise dann der Fall, wenn der Roboterarm an seinem Handflansch ein sich um eine Werkzeug-Antriebsachse drehbares Werkzeug, wie eine erfindungsgemäße Schraubvorrichtung trägt und eine der Drehgelenke des Roboterarms entlang dieser Werkzeug-Antriebsachse ausgerichtet ist.

Bei einem kraft- und/oder momentengeregelten Ansteuern der Gelenke des Roboterarms können die Gelenke des Roboterarms hinsichtlich ihrer Steifigkeit parametriert sein. In allen Ausführungen kann dazu das kraft- und/oder momentengeregelten Ansteuern von Antrieben des Roboterarms mittels Impedanzregelung oder Admittanzregelung erfolgen. Die Robotersteuerung kann eingerichtet sein, eine für die sichere Mensch-Roboter-Kooperation geeignete Nachgiebigkeit des Roboterarms insbesondere mittels Impedanzregelung oder Admittanzregelung zu erzeugen.

Roboterarme mit zugehörigen Robotersteuerungen, wie Industrieroboter können aber insbesondere sogenannte Leichtbauroboter sein, die sich zunächst von üblichen Industrierobotern dadurch unterscheiden, dass sie eine für die Mensch-Maschine-Kooperation (MRK) günstige Baugröße aufweisen und dabei eine zu ihrem Eigengewicht relativ hohe Tragfähigkeit aufweisen.

Ein solcher Roboterarm bzw. ein solcher Leichtbauroboter weist üblicherweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren. Zur Kraftmessung können Kraftsensoren verwendet werden, die in allen drei Raumrichtungen Kräfte und Drehmomente messen können. Alternativ oder ergänzend können die externen Kräfte auch sensorlos, beispielsweise anhand der gemessenen Motorströme der Antriebe an den Gelenken des Leichtbauroboters berechnet werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Daneben können Leichtbauroboter insbesondere auch, wie erwähnt, kraft- und/oder momentgeregelt statt lediglich positionsgeregelt betrieben werden, was beispielsweise eine Mensch-Roboter-Kollaboration (MRK) sicherer macht. Außerdem kann dadurch eine solche sichere Mensch-Maschine-Kollaboration erreicht werden, dass beispielsweise unbeabsichtigte Kollisionen des Roboterarmes mit Personen entweder verhindert oder zumindest derart abgeschwächt werden können, so dass den Personen bzw. Werkern kein Schaden entsteht.

Indem erfindungsgemäß die Aufspannvorrichtung eine mechanische Verstelleinrichtung und eine von der Robotersteuerung ansteuerbare Auslöseeinrichtung aufweist und die Verstelleinrichtung ausgebildet ist, die Fixiervorrichtung bezüglich des Grundgestells aus einer Betriebsposition in eine Sicherheitsposition selbsttätig zu verstellen, wenn die Auslöseeinrichtung aktiviert ist, kann im Falle eines Einklemmens beispielsweise eines Körperteils eines Werkers, das Einklemmen schnellstmöglich aufgehoben, d.h. beseitigt werden. Dies ist besonders deshalb vorteilhaft, weil im Falle einer vom Roboter erkannten Kollision aus Sicherheitsgründen der Roboterarm mittels eines sicherheitsgerichteten Stopps sofort angehalten wird und dies in einem ungünstigen Fall dazu führen kann, dass der nun stillstehende Roboterarm ein Körperteil des Werkers einklemmt. Da der sicherheitsgerichtet angehaltene Roboterarm nur sehr zeitverzögert wieder in einen betriebsbereiten Zustand gebracht werden kann und/oder ein Starten des Roboters sogar zu unerwünschten Bewegungen führen kann, ist die erfindungsgemäße Aufspannvorrichtung hilfreich, um einen eingeklemmten Werker sehr schnell aus dieser Lage befreien zu können. Da die erfindungsgemäße Aufspannvorrichtung vorzugsweise ohne jegliche aktive Ansteuerung auskommt, also selbsttätig arbeitet, kann auch im Falle eines Ausfalls der elektrischen Energiezufuhr oder im Falle eines Ausfalls der Robotersteuerung die erfindungsgemäße Aufspannvorrichtung sofort in die Sicherheitsposition gebracht werden, in der eine eventuelle Klemmung zuverlässig aufgehoben ist.

Der Roboter kann eine Kollisionserkennungseinrichtung aufweisen und die Robotersteuerung kann dabei ausgebildet und/oder eingerichtet sein, bei einer erkannten Kollision des Roboterarms mit einem Hindernis, insbesondere einem Menschen, die Auslöseeinrichtung zu aktivieren.

Die Kollisionserkennungseinrichtung kann in die Robotersteuerung implementiert sein und beispielsweise in einer an solches bekannten Weise ausgeführt sein. So kann die Kollisionserkennungseinrichtung beispielsweise separate Kollisionssensoren aufweisen. Beispielsweise können derartige Kollisionssensoren an der Struktur des Roboterarms, d.h. an den Gliedern des Roboterarms angeordnet sein. Eine Kollisionserkennung kann jedoch auch durch Auswerten von Kräften und Momenten in den Gelenken des Roboterarms durch die Robotersteuerung programmgesteuert erfolgen.

Der Roboter kann insbesondere eine Kollisionserkennungseinrichtung aufweisen, die ausgebildet ist, ein Einklemmen eines Hindernisses, insbesondere eines Menschen oder eines menschlichen Körperteiles zwischen dem von der Aufspannvorrichtung gehaltenen Werkstück oder Werkzeug und dem von dem Roboterarm gehaltenen und/oder bewegten Werkzeug oder Werkstück oder einem Glied des Roboterarm selbst, zu erkennen, und die Robotersteuerung kann dabei ausgebildet und/oder eingerichtet ist, bei einem erkannten Einklemmen, die Auslöseeinrichtung zu aktivieren.

Wird eine Kollision durch die Kollisionserkennungseinrichtung erkannt, so wird der Roboterarm durch die Robotersteuerung insbesondere sicherheitsgerichtet angehalten. Zeitgleich kann ein Steuersignal beispielsweise über einen sicheren Ausgang der Robotersteuerung an die erfindungsgemäße Aufspannvorrichtung gesendet werden. Beispielsweise kann ein solches Steuersignal schon allein ein Abschalten der Versorgung der elektrischen Energie von elektrischen Haltemagneten sein, welche gegen eine Federvorspannung oder entgegen der Schwerkraft die Fixiervorrichtung in der Betriebsposition halten. Dies bedeutet, dass im Falle eines sicherheitsgerichteten Anhalten des Roboterarms die Robotersteuerung die Stromversorgung der elektrischen Haltemagnete unterbricht, wodurch die Fixiervorrichtung selbsttätig, d.h. ohne eine Energieversorgung zu benötigen, aus der Betriebsposition in die Sicherheitsposition bewegt wird.

Die mechanische Verstelleinrichtung kann ausgebildet sein, die Fixiervorrichtung relativ zum Grundgestell in einer vertikalen Richtung, insbesondere aus der Betriebsposition in die Sicherheitsposition in Schwerkraftrichtung zu verstellen.

Eine solche vertikale Verstellbarkeit ist besonders dann zweckmäßig, wenn die mechanische Verstelleinrichtung mittels einer Lagerung, insbesondere einer Linearführung am Grundgestell derart gelagert ist, dass die Fixiervorrichtung bei aktivierter Auslöseeinrichtung sich selbsttätig mittels Schwerkraft in die Sicherheitsposition bewegt. So kann sich die Fixiervorrichtung in der Betriebsposition in einer höheren vertikalen Position befinden und insoweit eine höhere potentielle Energie aufweisen. Die Sicherheitsposition befindet sich dann in einer niedrigeren vertikalen Position und die Fixiervorrichtung weist dabei insoweit eine geringere potentielle Energie auf als in der Betriebsposition. Die Fixiervorrichtung kann also allein durch die potentielle Energie, d.h. durch Gewichtskraft in die Sicherheitsposition bewegt werden. Die Fixiervorrichtung kann also rein passiv arbeiten, d.h. benötigt insbesondere keine externe Energieversorgung.

Die mechanische Verstelleinrichtung kann aber auch ausgebildet sein, die Fixiervorrichtung relativ zum Grundgestell in einer horizontalen Richtung zu verstellen.

Eine solche horizontale Verstellbarkeit ist besonders dann zweckmäßig, wenn die mechanische Verstelleinrichtung mittels einer federvorgespannten Lagerung, insbesondere einer federvorgespannten Linearführung am Grundgestell derart gelagert ist, dass die Fixiervorrichtung bei aktivierter Auslöseeinrichtung sich selbsttätig mittels einer Federvorspannkraft in die Sicherheitsposition bewegt. Die Federvorspannkraft kann beispielsweise von einer metallischen Federwendel aufgebracht werden, die in der Betriebsposition der Fixiervorrichtung gespannt ist und wenn sie sich entspannt, die Fixiervorrichtung in ihre Sicherheitsposition bewegt. Die Fixiervorrichtung kann also in einer solchen Ausführungsform mittels wenigstens einer mechanischen Feder, die ja auch potentielle Energie speichert, auch rein passiv arbeiten, d.h. benötigt insbesondere keine externe Energieversorgung.

Die mechanische Verstelleinrichtung kann aber auch in anderen Ausführungsvarianten mittels einer Lagerung, insbesondere einer Linearführung am Grundgestell derart gelagert sein, dass die Fixiervorrichtung bei aktivierter Auslöseeinrichtung sich selbsttätig mittels Schwerkraft in die Sicherheitsposition bewegt.

Die mechanische Verstelleinrichtung kann aber auch in anderen Ausführungsvarianten mittels einer federvorgespannten Lagerung, insbesondere einer federvorgespannten Linearführung am Grundgestell derart gelagert sein, dass die Fixiervorrichtung bei aktivierter Auslöseeinrichtung sich selbsttätig mittels einer Federvorspannkraft in die Sicherheitsposition bewegt.

Beispielsweise kann die Bewegung der Fixiervorrichtung aus ihrer Betriebsposition in ihre Sicherheitsposition auch auf einer Bahn erfolgen, welche sowohl vertikale, als auch horizontale Richtungskomponenten aufweist. Beispielsweise kann die Fixiervorrichtung auch mittels einer Schwenkbewegung aus der Betriebsposition in die Sicherheitsposition gebracht werden.

Die Auslöseeinrichtung kann wenigstens eine mechanische Halteeinrichtung, insbesondere aufweisend einen mechanisch zu betätigenden Riegel, und/oder eine pneumatisch Halteeinrichtung, insbesondere aufweisend einen pneumatisch zu bewegenden Riegel und/oder eine elektromagnetische Halteeinrichtung aufweisen, wobei die jeweilige Halteeinrichtung ausgebildet ist, die Fixiervorrichtung in einem nichtaktivierten Zustand der Auslöseeinrichtung in der Betriebsposition zu halten.

Die jeweilige Halteeinrichtung kann ausgebildet sein, die Fixiervorrichtung in einem aktivierten Zustand der Auslöseeinrichtung freizugeben, so dass die Fixiervorrichtung sich selbsttätig aus der Betriebsposition in die Sicherheitsposition verstellen kann.

Die elektromagnetische Halteeinrichtung kann wenigstens einen, insbesondere vier am Grundgestell befestigte Elektromagnete aufweisen, welche ausgebildet sind, eine mit der Fixiervorrichtung verbundene Ankerplatte in einem nichtaktivierten Zustand der Auslöseeinrichtung mittels Magnetkraft in der Betriebsposition der Fixiervorrichtung festzuhalten.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine schematische Darstellung eines beispielhaften MRK-Arbeitsplatzes mit einem Werkzeug führenden Roboter, einem auf einer erfindungsgemäßen Aufspannvorrichtung ortsfest angeordnetem Werkstück und einem Werker, der ein zusätzliches manuelles Werkzeug führt,
- Fig. 2: eine Schnittdarstellung der erfindungsgemäßen Aufspannvorrichtung gemäß Fig. 1 in Alleinstellung in ihrer Betriebsposition,
- Fig. 3: eine Schnittdarstellung der erfindungsgemäßen Aufspannvorrichtung gemäß Fig. 1 in Alleinstellung in ihrer abgesenkten Sicherheitsposition, nachdem die Auslöseeinrichtung aktiviert wurde, und
- Fig. 4: eine Explosionsdarstellung der erfindungsgemäßen Aufspannvorrichtung gemäß Fig. 1.

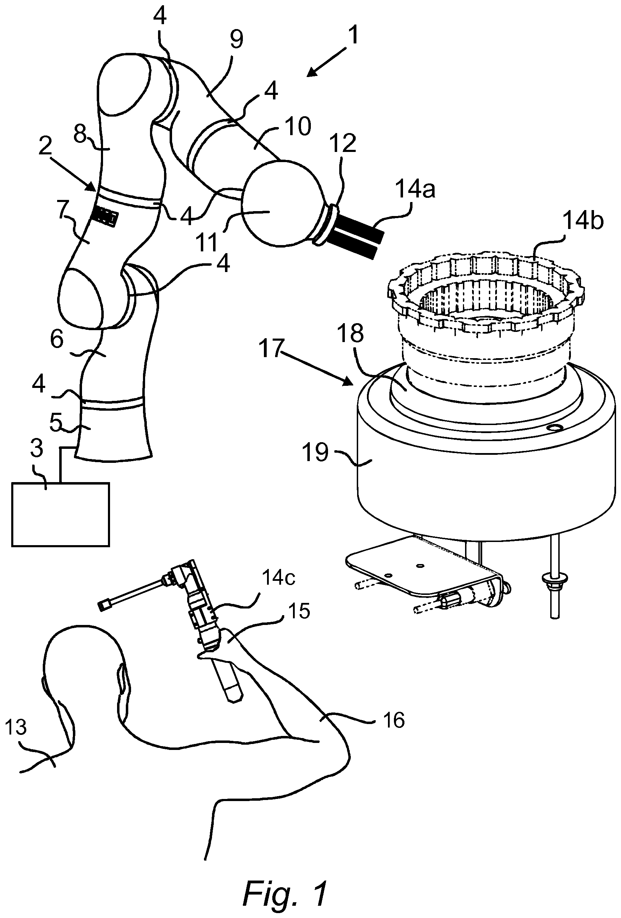

Die Fig. 1 zeigt schematisch einen MRK-Arbeitsplatz mit einem Roboter 1 in einer beispielhaften Ausführung als ein so genannter Leichtbauroboter. Der Roboter 1 weist einen Roboterarm 2 und eine Robotersteuerung 3 auf. Der Roboterarm 2 umfasst mehrere, im Falle des vorliegenden Ausführungsbeispiels acht nacheinander angeordnete und mittels sieben Gelenke 4 drehbar miteinander verbundene Glieder 5 bis 12.

Die Robotersteuerung 3 des Roboters 1 ist ausgebildet bzw. eingerichtet, ein Roboterprogramm auszuführen, durch welches die Gelenke 4 des Roboterarms 2 gemäß des Roboterprogramms automatisiert oder in einem Handfahrbetrieb automatisch verstellt bzw. drehbewegt werden können. Dazu ist die Robotersteuerung 3 mit ansteuerbaren elektrischen Antrieben verbunden, die ausgebildet sind, die Gelenke 4 des Roboters 1 zu verstellen.

Ein Endglied 12 des Roboterarms 2, das auch als Roboterflansch bezeichnet wird, trägt ein Werkzeug 14a. Das Werkzeug 14a ist im Falle des vorliegenden Ausführungsbeispiels zur automatischen Bearbeitung eines Werkstücks 14b ausgebildet.

An dem beispielhaften MRK-Arbeitsplatz kollaboriert ein Werker 13 mit dem Roboter 1. Dazu handhabt der Werker 13 ein manuelles Werkzeug 14c, das er in seiner Hand 15 hält und mittels seines Armes 16 bewegen kann.

Der MRK-Arbeitsplatz des vorliegenden Ausführungsbeispiels weist außerdem eine Aufspannvorrichtung 17 auf. Die Aufspannvorrichtung 17 umfasst ein ortsfestes Grundgestell 19 und eine Fixiervorrichtung 18. Die Fixiervorrichtung 18 ist ausgebildet, im Falle des vorliegenden Ausführungsbeispiels das Werkstück 14b festzuhalten, derart, dass das an der Aufspannvorrichtung 17 gehaltene, in Fig. 1 in gestrichelten Linien dargestellte Werkstück 14b in Zusammenwirken mit dem Roboterarm 2 und dem Werker 13 zu montieren und/oder zu bearbeiten ist. Das Grundgestell 19 ist ortsfest installiert. Das Grundgestell 19 kann dazu beispielsweise auf dem Boden einer Werkshalle oder auf einem mit dem Boden der Werkshalle verbundenen Gerüst montiert sein. Die Fixiervorrichtung 18 kann beispielsweise Bohrungen, Nuten und/oder Schwalbenschwanzführungen aufweisen, um unterschiedlichste Werkstücke 14b an der Fixiervorrichtung 18 vorübergehend fixieren zu können, beispielsweise mittels Spannpratzen. Die Fixiervorrichtung 18 kann somit generell analog eines Maschinentisches ausgebildet sein.

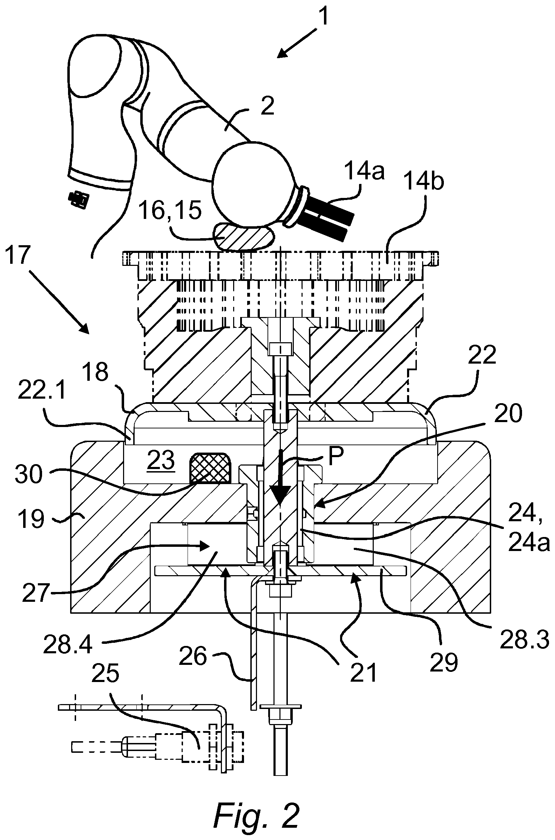

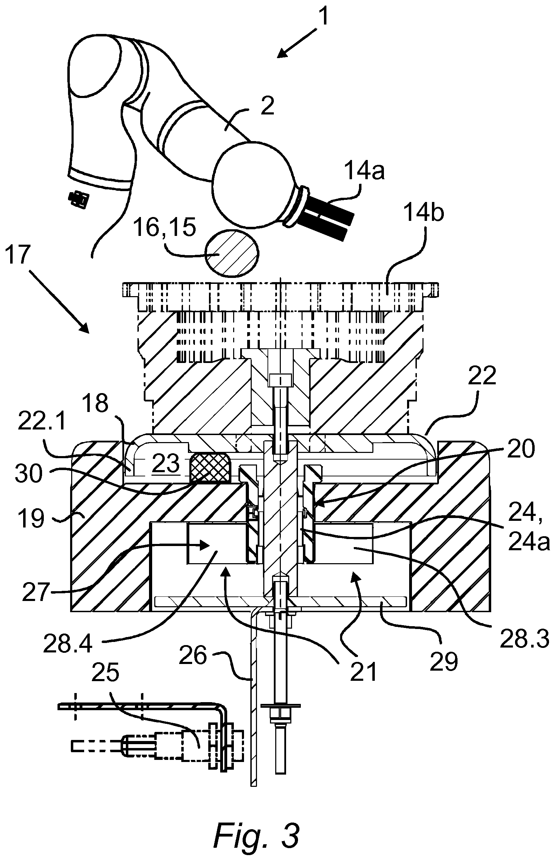

Wie in der Fig. 2 und Fig. 3 in Alleinstellung gezeigt, weist die Aufspannvorrichtung 17 eine mechanische Verstelleinrichtung 20 und eine von der Robotersteuerung 3 ansteuerbare Auslöseeinrichtung 21 auf.

Die Verstelleinrichtung 20 ist ausgebildet, die Fixiervorrichtung 18 bezüglich des Grundgestells 19 aus einer Betriebsposition, wie in Fig. 2 gezeigt, in eine Sicherheitsposition, wie in Fig. 3 gezeigt, selbsttätig zu verstellen, wie dies durch den Pfeil P veranschaulicht ist, wenn die Auslöseeinrichtung 21 aktiviert ist.

Die Fixiervorrichtung 18 weist eine Grundplatte 22 auf. Die Grundplatte 22 kann dabei einen Hohlraum 23 des Grundgestells 19 überdecken. Dazu kann die Grundplatte 22 einen schürzenartig heruntergezogenen Randabschnitt 22.1 aufweisen, durch den ein Eingreifen in den Hohlraum 23 verhindert ist, wenn sich die Fixiervorrichtung 18 in der in Fig. 2 dargestellten Betriebsposition befindet. Der Hohlraum 23 ist ausgebildet, in der Sicherheitsposition gemäß Fig. 3 die Fixiervorrichtung 18 in dessen abgesenktem Zustand aufzunehmen.

Um die Fixiervorrichtung 18 aus der Betriebsposition in die abgesenkte Sicherheitsposition verstellen zu können, ist die Fixiervorrichtung 18 mittels einer Lagerung 24, insbesondere einer Linearführung 24a am Grundgestells 19 linear verstellbar gelagert. Mittels der Lagerung 24, insbesondere der Linearführung 24a ist die mechanische Verstelleinrichtung 20 im Falle des vorliegenden Ausführungsbeispiels ausgebildet, die Fixiervorrichtung 18 relativ zum Grundgestell 19 in einer vertikalen Richtung (Pfeil P), d.h. in Schwerkraftrichtung aus der Betriebsposition in die Sicherheitsposition zu verstellen.

Wenn der Roboter 1 mittels seine Kollisionserkennungseinrichtung, welche zumindest teilweise oder vollständig in die Robotersteuerung 3 (Fig. 1) integriert sein kann, eine Kollision erkennt - wie in Fig. 2 schematisch dargestellt, beispielsweise wenn der Roboterarm 2 die Hand 15 oder den Arm 16 des Werkers 13 zwischen dem Roboterarm 2 und dem Werkstück 14b einklemmt - dann wird die Auslöseeinrichtung 21 durch die Robotersteuerung 3 aktiviert.

Hat die Robotersteuerung 3 die Auslöseeinrichtung 21 aktiviert, dann wird aufgrund der mechanischen und selbsttätigen Verstelleinrichtung 20 bzw. mittels der Lagerung 24, insbesondere der Linearführung 24a die Fixiervorrichtung 18 selbsttätig mittels Schwerkraft in die Sicherheitsposition, wie in Fig. 3 dargestellt, bewegt.

Die Fixiervorrichtung 18 fällt insoweit mittels Schwerkraft nach unten in die Sicherheitsposition. Damit die Fixiervorrichtung 18 nicht hart gegen das Grundgestell 19 aufschlägt, kann ein elastischer Puffer 30 vorgesehen sein, welcher die in die Sicherheitsposition herabfallende Fixiervorrichtung 18 dämpfend auffängt.

In der Sicherheitsposition ist dann, wie in Fig. 3 schematisch dargestellt, die Klemmung aufgehoben, d.h. im Falle des dargestellten Beispiels die Hand 15 oder den Arm 16 des Werkers 13 nicht mehr zwischen dem Roboterarm 2 und dem Werkstück 14b einklemmt, sondern wieder freigegeben.

Wenigstens ein Positionsgeber 25, insbesondere zwei insoweit redundant ausgeführte Positionsgeber 25 können beispielsweise einen Hall-Sensor aufweisen und erkennen an einem mit der absenkbaren Fixiervorrichtung 18 verbundene Steg 26, der ein Metallstreifen sein kann, ob sich die Fixiervorrichtung 18 in der Sicherheitsposition, wie in Fig. 3 dargestellt, befindet oder sich, wie in Fig. 2 dargestellt in der Betriebsposition befindet. Der Positionsgeber 25 kann mit der Robotersteuerung 3 elektrisch verbunden und steuerungstechnisch derart eingebunden sein, dass ein automatisches Ansteuern des Roboterarms 2 nur dann möglich ist, wenn über den Positionsgeber 25 automatisch festgestellt ist, dass sich die Fixiervorrichtung 18 in der Betriebsposition befindet.

Die Auslöseeinrichtung 21 weist im Falle des vorliegenden Ausführungsbeispiels eine elektromagnetische Halteeinrichtung 27 auf. Die elektromagnetische Halteeinrichtung 27 ist ausgebildet, die Fixiervorrichtung 18 in einem nichtaktivierten Zustand der Auslöseeinrichtung 21 in der Betriebsposition zu halten.

Die elektromagnetische Halteeinrichtung 27 ist dabei ausgebildet, die Fixiervorrichtung 18 in einem aktivierten Zustand der Auslöseeinrichtung 21 freizugeben, so dass die Fixiervorrichtung 18 sich selbsttätig aus der Betriebsposition gemäß Fig. 2 in die Sicherheitsposition gemäß Fig. 3 verstellen kann.

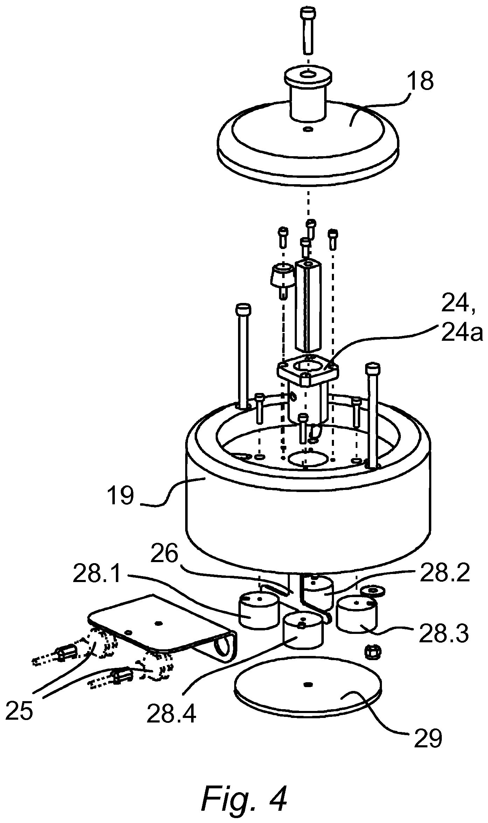

In der Fig. 4 ist deutlich dargestellt, dass im Falle des vorliegenden Ausführungsbeispiels die elektromagnetische Halteeinrichtung 27 vier am Grundgestell 19 befestigte Elektromagnete 28.1, 28.2, 28.3, 28.4 aufweist, welche ausgebildet sind, eine mit der Fixiervorrichtung 18 verbundene Ankerplatte 29 in einem nichtaktivierten Zustand der Auslöseeinrichtung 21 mittels Magnetkraft in der Betriebsposition gemäß Fig. 2 der Fixiervorrichtung 18 festzuhalten.

## Patentansprüche

1. MRK-Arbeitsplatz, aufweisend einen Roboter (1) mit einer Robotersteuerung (3) und mit einem mehrere Gelenke (4) und die Gelenke (4) verbindende Glieder (5-12) aufweisenden Roboterarm (2), dessen Gelenke (4) von der Robotersteuerung (3) automatisch zu verstellen sind, um ein von dem Roboterarm (2) gehaltenes Werkzeug (14a) oder Werkstück (14b) durch Einstellen der Gelenke (4) des Roboterarms (2) im Raum zu halten und/oder zu bewegen, des Weiteren aufweisend eine Aufspannvorrichtung (17) mit einem ortsfesten Grundgestell (19) und einer Fixiervorrichtung (18), welche ausgebildet ist, ein Werkstück (14b) oder ein Werkzeug (14a) festzuhalten, derart, dass das an der Aufspannvorrichtung (17) oder am Roboterarm (2) gehaltene Werkstück (14b) in Zusammenwirken mit dem am Roboterarm (2) oder an der Aufspannvorrichtung (17) gehaltenen Werkzeug (14a) zu montieren und/oder zu bearbeiten ist,
**dadurch gekennzeichnet, dass**
die Aufspannvorrichtung (17) eine mechanische Verstelleinrichtung (20) und eine von der Robotersteuerung (3) ansteuerbare Auslöseeinrichtung (21) aufweist und die Verstelleinrichtung (20) ausgebildet ist, die Fixiervorrichtung (18) bezüglich des Grundgestells (19) aus einer Betriebsposition in eine Sicherheitsposition selbsttätig zu verstellen, wenn die Auslöseeinrichtung (21) aktiviert ist.

2. MRK-Arbeitsplatz nach Anspruch 1, bei dem der Roboter (1) eine Kollisionserkennungseinrichtung aufweist und die Robotersteuerung (3) ausgebildet und/oder eingerichtet ist, bei einer erkannten Kollision des Roboterarms (2) mit einem Hindernis, insbesondere einem Menschen, die Auslöseeinrichtung (21) zu aktivieren.

3. MRK-Arbeitsplatz nach Anspruch 1 oder 2, bei dem der Roboter (1) eine Kollisionserkennungseinrichtung aufweist, die ausgebildet ist, ein Einklemmen eines Hindernisses, insbesondere eines Menschen oder eines menschlichen Körperteiles zwischen dem von der Aufspannvorrichtung (17) gehaltenen Werkstück (14b) oder Werkzeug (14a) und dem von dem Roboterarm (2) gehaltenen und/oder bewegten Werkzeug (14a) oder Werkstück (14b) oder einem Glied (5-12) des Roboterarm (2) selbst, zu erkennen, und die Robotersteuerung (3) ausgebildet und/oder eingerichtet ist, bei einem erkannten Einklemmen, die Auslöseeinrichtung (21) zu aktivieren.

4. MRK-Arbeitsplatz nach einem der Ansprüche 1 bis 3, bei dem die mechanische Verstelleinrichtung (20) ausgebildet ist, die Fixiervorrichtung (18) relativ zum Grundgestell (19) in einer vertikalen Richtung, insbesondere aus der Betriebsposition in die Sicherheitsposition in Schwerkraftrichtung zu verstellen.

5. MRK-Arbeitsplatz nach einem der Ansprüche 1 bis 3, bei dem die mechanische Verstelleinrichtung (20) ausgebildet ist, die Fixiervorrichtung (18) relativ zum Grundgestell (19) in einer horizontalen Richtung zu verstellen.

6. MRK-Arbeitsplatz nach einem der Ansprüche 1 bis 5, bei dem die mechanische Verstelleinrichtung (20) mittels einer Lagerung (24), insbesondere einer Linearführung (24a) am Grundgestell (19) derart gelagert ist, dass die Fixiervorrichtung (18) bei aktivierter Auslöseeinrichtung (21) sich selbsttätig mittels Schwerkraft in die Sicherheitsposition bewegt.

7. MRK-Arbeitsplatz nach einem der Ansprüche 1 bis 5, bei dem die mechanische Verstelleinrichtung (20) mittels einer federvorgespannten Lagerung (24), insbesondere einer federvorgespannten Linearführung (24a) am Grundgestell (19) derart gelagert ist, dass die Fixiervorrichtung (18) bei aktivierter Auslöseeinrichtung (21) sich selbsttätig mittels einer Federvorspannkraft in die Sicherheitsposition bewegt.

8. MRK-Arbeitsplatz nach einem der Ansprüche 1 bis 7, bei dem die Auslöseeinrichtung (21) wenigstens eine mechanische Halteeinrichtung, insbesondere aufweisend einen mechanisch zu betätigenden Riegel, und/oder eine pneumatisch Halteeinrichtung, insbesondere aufweisend einen pneumatisch zu bewegenden Riegel und/oder eine elektromagnetische Halteeinrichtung (27) aufweist, wobei die jeweilige Halteeinrichtung (27) ausgebildet ist, die Fixiervorrichtung (18) in einem nichtaktivierten Zustand der Auslöseeinrichtung (21) in der Betriebsposition zu halten.

9. MRK-Arbeitsplatz nach Anspruch 8, bei dem die jeweilige Halteeinrichtung (27) ausgebildet ist, die Fixiervorrichtung (18) in einem aktivierten Zustand der Auslöseeinrichtung (21) freizugeben, so dass die Fixiervorrichtung (18) sich selbsttätig aus der Betriebsposition in die Sicherheitsposition verstellen kann.

10. MRK-Arbeitsplatz nach Anspruch 8 oder 9, bei dem die elektromagnetische Halteeinrichtung (27) wenigstens einen, insbesondere vier am Grundgestell (19) befestigte Elektromagnete (28.1, 28.2, 28.3, 28.4) aufweist, welche ausgebildet sind, eine mit der Fixiervorrichtung (18) verbundene Ankerplatte (29) in einem nichtaktivierten Zustand der Auslöseeinrichtung (21) mittels Magnetkraft in der Betriebsposition der Fixiervorrichtung festzuhalten.

## Claims

1. HRC workstation, comprising a robot (1) with a robot controller (3) and a robot arm (2) including a plurality of joints (4) and links (5-12) connecting the joints (4), the joints (4) of which can be automatically adjusted by the robot controller (3) in order to hold in space and/or move a tool (14a) or workpiece (14b) held by the robot arm (2) by adjusting the joints (4) of the robot arm (2), also comprising a clamping device (17) with a stationary base frame (19) and a fixing device (18) which is configured to hold in place a workpiece (14b) or a tool (14a), such that the workpiece (14b) held on the clamping device (17) or on the robot arm (2) is mounted and/or processed in cooperation with the workpiece (14a) held on the robot arm (2) or on the clamping device (17),
**characterised in that**
the clamping device (17) comprises a mechanical adjusting device (20) and a triggering device (21) that is controllable by the robot controller (3) and the adjusting device (20) is designed to automatically move the fixing device (18) relative to the base frame (19) from an operating position to a safety position when the triggering device (21) is activated.

2. HRC workstation according to claim 1, wherein the robot (1) comprises a collision detection device and the robot controller (3) is designed and/or configured to activate the triggering device (21) in response to the detection of a collision of the robot arm (2) with an obstacle, in particular a person.

3. HRC workstation according to claim 1 or 2, wherein the robot (1) comprises a collision detection device which is designed to detect the trapping of an obstacle, in particular a person or a body part of a person, between the workpiece (14b) or tool (14a) held by the clamping device (17) and the tool (14a) or workpiece (14b) held and/or moved by the robot arm (2) or a link (5-12) of the robot arm (2) itself, and the robot controller (3) is designed and/or configured to activate the triggering device (21) in response to the detection of the trapping of an obstacle.

4. HRC workstation according to any of claims 1 to 3, wherein the mechanical adjusting device (20) is designed to move the fixing device (18) relative to the base frame (19) in a vertical direction in the direction of gravity, in particular from the operating position to the safety position.

5. HRC workstation according to any of claims 1 to 3, wherein the mechanical adjusting device (20) is designed to move the fixing device (18) in a horizontal direction relative to the base frame (19).

6. HRC workstation according to any of claims 1 to 5, wherein the mechanical adjusting device (20) is mounted on the base frame (19) by means of a bearing (24), in particular a linear guide (24a), such that the fixing device (18) moves automatically into the safety position by gravity when the triggering device (21) is activated.

7. HRC workstation according to any of claims 1 to 5, wherein the mechanical adjusting device (20) is mounted on the base frame (19) by means of a spring-biased bearing (24), in particular a spring-biased linear guide (24a), such that the fixing device (18) when the triggering device (21) is activated moves automatically into the safety position by means of spring-biased force.

8. HRC workstation according to any of claims 1 to 7, wherein the triggering device (21) comprises at least one mechanical holding device, comprising in particular a mechanically activated bar, and/or a pneumatic holding device, comprising in particular a pneumatically moved bar and/or an electromagnetic holding device (27), wherein the respective holding device (27) is designed to hold the fixing device (18) in a non-activated state of the triggering device (21) in the operating position.

9. HRC workstation according to claim 8, wherein the respective holding device (27) is designed to release the fixing device (18) in an activated state of the triggering device (21) so that the fixing device (18) can automatically move from the operating position to the safety position.

10. HRC workstation according to claim 8 or 9, wherein the electromagnetic holding device (27) comprises at least one, in particular four electromagnets (28.1, 28.2, 28.3, 28.4) attached to the base frame (19), which are configured, in a non-activated state of the triggering device (21), to hold an anchor plate (29) connected to the fixing device (18) in the operating position of the fixing device by means of magnetic force.

## Revendications

1. Poste de travail pour collaboration homme-robot, présentant un robot (1) comportant une commande de robot (3) et un bras de robot (2) présentant plusieurs articulations (4) et des membres (5-12) reliant les articulations (4), bras dont les articulations (4) doivent être réglées automatiquement par la commande de robot (3) pour maintenir dans l'espace et/ou pour déplacer un outil (14a) ou une pièce à usiner (14b) retenu(e) par le bras de robot (2), présentant en outre un dispositif de serrage (17) avec un châssis (19) stationnaire et un dispositif de fixation (18) qui est réalisé pour maintenir une pièce à usiner (14b) ou un outil (14a) de telle sorte que la pièce à usiner (14b) retenue sur le dispositif de serrage (17) ou sur le bras de robot (2) doit être montée et/ou usinée en coopération avec l'outil (14a) retenu sur le bras de robot (2) ou sur le dispositif de serrage (17),
**caractérisé en ce que**
le dispositif de serrage (17) présente un dispositif de réglage (20) mécanique et un dispositif de déclenchement (21) pilotable par la commande de robot (3), et le dispositif de réglage (20) est réalisé pour déplacer automatiquement le dispositif de fixation (18) par rapport au châssis (19) depuis une position de fonctionnement jusque dans une position de sécurité lorsque le dispositif de déclenchement (21) est activé.

2. Poste de travail pour collaboration homme-robot selon la revendication 1, dans lequel le robot (1) présente un dispositif de détection de collision et la commande de robot (3) et réalisée et/ou équipée de telle sorte que le dispositif de déclenchement (21) est activé en cas de collision détectée du bras de robot (2) avec un obstacle, en particulier une personne.

3. Poste de travail pour collaboration homme-robot selon les revendications 1 ou 2, dans lequel le robot (1) présente un dispositif de détection de collision qui est réalisée pour détecter un coincement d'un obstacle, en particulier d'une personne ou d'une partie du corps d'une personne entre la pièce à usiner (14b) ou l'outil (14a) retenu(e) par le dispositif de serrage (17) et l'outil (14a) ou la pièce à usiner (14b) retenu(e) et/ou déplacé par le bras de robot (2) ou un membre (5-12) du bras de robot (2) lui-même, et la commande de robot (3) est réalisée et/ou équipée pour activer le dispositif de déclenchement (21) en cas de coincement détecté.

4. Poste de travail pour collaboration homme-robot selon l'une des revendications 1 à 3, dans lequel le dispositif de réglage (20) mécanique est réalisé pour régler dans le sens de la pesanteur le dispositif de fixation (18) par rapport au châssis (19) dans une direction verticale, en particulier depuis la position de fonctionnement jusque dans la position de sécurité.

5. Poste de travail pour collaboration homme-robot selon l'une des revendications 1 à 3, dans lequel le dispositif de réglage (20) mécanique est réalisé pour régler le dispositif de fixation (18) par rapport au châssis (19) dans une direction horizontale.

6. Poste de travail pour collaboration homme-robot selon l'une des revendications 1 à 5, dans lequel le dispositif de réglage (20) mécanique est monté sur le châssis (19)au moyen d'un support (24) en particulier d'un guidage linéaire (24a) de telle sorte que le dispositif de fixation (18) se déplace automatiquement dans la position de sécurité lorsque le dispositif de déclenchement (21) est activé.

7. Poste de travail pour collaboration homme-robot selon l'une des revendications 1 à 5, dans lequel le dispositif de réglage (20) mécanique est monté sur le châssis (19)au moyen d'un support (24) précontraint par un ressort, en particulier d'un guidage linéaire (24a) précontraint par un ressort, de telle sorte que le dispositif de fixation (18) se déplace automatiquement dans la position de sécurité au moyen de la force de précontrainte du ressort lorsque le dispositif de déclenchement (21) est activé.

8. Poste de travail pour collaboration homme-robot selon l'une des revendications 1 à 7, dans lequel le dispositif de déclenchement (21) présente au moins un dispositif de retenue mécanique, présentant en particulier un verrou à actionner mécaniquement, et/ou un dispositif de retenue pneumatique, présentant en particulier un verrou à déplacer pneumatiquement, et/ou un dispositif de retenue (27) électromagnétique, le dispositif de retenue (217) respectif étant réalisé pour retenir dans la position de fonctionnement le dispositif de fixation (18) dans un état non activé du dispositif de déclenchement (21).

9. Poste de travail pour collaboration homme-robot selon la revendication 8, dans lequel le dispositif de retenue (27) respectif est réalisé pour libérer le dispositif de fixation (18) dans un état activé du dispositif de déclenchement (21), de telle sorte que le dispositif de fixation (18) peut se déplacer automatiquement depuis la position de fonctionnement jusque dans la position de sécurité.

10. Poste de travail pour collaboration homme-robot selon les revendications 8 ou 9, dans lequel le dispositif de retenue (27) électromagnétique présente au moins un, en particulier quatre électroaimants (28.1, 28.2, 28.3, 28.4) fixés sur le châssis (19), qui sont réalisés pour maintenir une plaque d'ancrage (29) reliée au dispositif de fixation (18) dans un état non activé du dispositif de déclenchement (21) au moyen d'une force magnétique, dans la position de fonctionnement du dispositif de fixation.
